# EUROPÄISCHE PATENTSCHRIFT

(11) **EP 1 498 994 B1**
(45) Veröffentlichungstag und Bekanntmachung des Hinweises auf die Patenterteilung: **11.10.2006**
(21) Anmeldenummer: 04012164.2
(22) Anmeldetag: 22.05.2004
(51) Int. Cl.: H02G 3/08, H02G 15/013

(54) **Kabeltülle**
Cable grommet
Bague de câble

(30) Priorität: 11.07.2003 DE 10331697
(43) Veröffentlichungstag der Anmeldung: 19.01.2005
(73) Patentinhaber: Murrplastik Systemtechnik GmbH, 71570 Oppenweiler (DE)
(72) Erfinder: Scharf-Martini, Lutz, 73614 Schorndorf (DE); Funk, Rainer, 71543 Wüstenrot (DE); Sohn, Wolfgang, 71404 Korb (DE)
(74) Vertreter: WOLF & LUTZ

(56) Entgegenhaltungen:
- EP-A- 0 435 172
- DE-A1- 10 046 157
- DE-C1- 3 942 776
- FR-A- 2 825 841
- US-A- 2 922 836

## Beschreibung

Die Erfindung betrifft eine Kabeltülle gemäß Oberbegriff des Anspruches 1.

Eine Kabeltülle ist beispielsweise aus der DE 100 46 157 A1 bekannt. Sie dient dazu, ein Kabel durch ein Kabeldurchführungsgehäuse durchzuführen. Das Kabeldurchführungsgehäuse kann beispielsweise in der Wand eines Schaltschranks angeordnet sein. Die Kabeltülle ist massiv aus einem flexiblen Material gefertigt, der Kabelkanal verläuft in Längsrichtung durch die massive Tülle und seine Innenfläche liegt eng an einem aufgenommenen Kabel an. Dies bewirkt zum einen eine Zugentlastung. Zum anderen wird der Kabelkanal bei eingesetztem Kabel abgedichtet, so dass das Eindringen von Feuchtigkeit durch den Kabelkanal in den Schaltschrank zumindest erschwert wird. Die bekannte Kabeltülle hat jedoch den Nachteil, dass sie nur für Kabel einer bestimmten Dicke geeignet ist. Ist das Kabel zu dick, so passt es nicht in den Kabelkanal. Ist es zu dünn, so wird keine Dichtwirkung erzielt. Für unterschiedlich dicke Kabel müssen daher stets verschiedene Kabeltüllen mit unterschiedlich großen Kabelkanälen bereitgehalten werden.

Aus der FR 2 825 841 A und der DE 39 42 776 C sind Kabeltüllen bekannt, deren Kabelkanäle jeweils eine deren Querschnitt durchspannende elastomere Trennwand aufweist. Diese ist mit einer mit dem Längsschlitz verbundenen, elastisch aufweitbaren Kabelöffnung zur Durchführung des aufzunehmenden Kabels versehen. Da die Trennwand sehr dünn ist, kann sie beim Einsetzen des Kabels leicht einreißen. Zudem ist die Fläche, an der die Trennwand am Kabel anliegt, sehr klein, was die Dichtwirkung beeinträchtigt.

Es ist daher Aufgabe der Erfindung, eine Kabeltülle der eingangs genannten Art derart weiterzubilden, dass ihr Verschleiß verringert wird.

Die Aufgabe wird erfindungsgemäß durch eine Kabeltülle gemäß Anspruch 1 gelöst.

Der Erfindung liegt der Gedanke zugrunde, dass die Trennwand beim Einsetzen des Kabels über den Längsschlitz durch das Kabel verformt werden kann, so dass sich die Kabelöffnung aufweiten kann. Der Rand der Kabelöffnung legt sich dann um das eingelegte Kabel, sofern dieses eine Mindestdicke aufweist. Desweiteren können Kabel mit Querschnitten verschiedener Formen durch die Kabelöffnung geführt werden, wobei diese sich dann an die Form des Kabels anpasst. Die erfindungsgemäße Kabeltülle ist somit für Kabel mit rundem, ovalem und eckigem Querschnitt gleichermaßen geeignet. Die Verstärkung der Trennwand am Rand der Kabelöffnung verringert zum einen den Verschleiß, da der Rand der Kabelöffnung durch das eingesetzte Kabel besonders stark gedehnt wird. Zum anderen legt sich der verstärkte Rand der Kabelöffnung wie ein Dichtring um das Kabel, so dass eine gute Dichtwirkung erzielt wird.

Zweckmäßig ist die Querschnittsfläche der Kabelöffnung kleiner als die Querschnittsfläche des aufzunehmenden Kabels. Aufgrund der elastischen Rückstellkraft der verformten Trennwand liegt der Rand der Kabelöffnung besonders gut am Kabel an, so dass eine gute Dichtigkeit und Zugentlastung erzielt wird. Die Mitte der Kabelöffnung ist vorzugsweise exzentrisch zu einer längs durch den Körper verlaufenden Mittelachse angeordnet. Dabei ist die Kabelöffnung vorteilhaft an den Körper angrenzend und zum Längsschlitz hin randoffen angeordnet. Insbesondere wenn ein Kabeldurchführungsgehäuse, in das die Kabeltülle eingesetzt wird, auf den Körper einen Druck ausübt, so dass der Längsschlitz beim Einsetzen in das Kabeldurchführungsgehäuse durch Zusammenpressen zweier einander gegenüberliegender Flächen formschlüssig geschlossen wird, ist der auf die Kabelöffnung übertragene Druck an der Grenze zum Körper besonders groß, so dass eine gute Abdichtung erzielt wird. Vorteilhafterweise weist der Körper an den Flächen des Längsschlitzes mindestens eine Nut-Feder-Verbindung auf, die beim Schließen des Längsschlitzes geschlossen wird. Dies verstärkt ebenfalls die Dichtwirkung.

Der Körper weist zweckmäßig beidseitig des Längsschlitzes eine erhöhte Wandstärke auf. Dadurch wird beim Schließen des Längsschlitzes der Druck auf den Rand der Kabelöffnung verstärkt.

Der Körper weist an seiner Außenfläche zweckmäßig Führungen zum formschlüssigen Einsetzen in ein Kabeldurchführungsgehäuse auf. Dadurch wird ein definiertes Einsetzen in das Gehäuse erleichtert.

Der Körper und die Trennwand sind vorteilhaft einstückig aus demselben Material gefertigt. Als Material kommt vor allem ein thermoplastisches Material in Betracht, vorzugsweise Kautschuk. Auch weitere thermoplastische Materialien, wie Santoprene, SEBS, SPS und EPDM oder andere Polyurethane, kommen in Frage. Die Kabeltülle ist zweckmäßig als Spritzgussteil gefertigt.

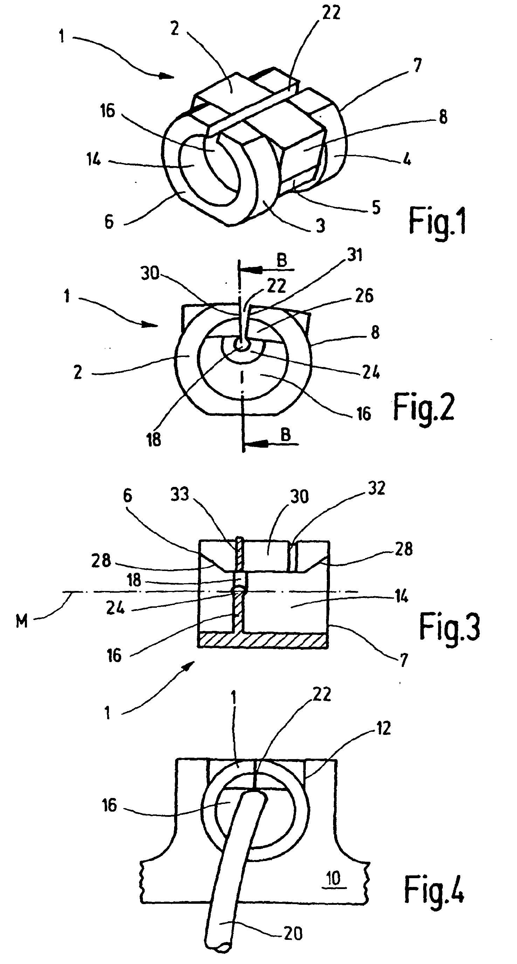

Im Folgenden wird die Erfindung anhand eines in der Zeichnung schematisch dargestellten Ausführungsbeispiels näher erläutert. Es zeigen
- Fig. 1: eine perspektivische Ansicht einer erfindungsgemäßen Kabeltülle;
- Fig. 2: eine Vorderansicht der Kabeltülle gemäß Fig. 1 mit aufgebogenem Längsschlitz;
- Fig. 3: einen Schnitt entlang der Linie B-B gemäß Fig. 2;
- Fig. 4: eine schematische Vorderansicht eines Teils eines Kabeldurchführungsgehäuses mit eingesetzter Kabeltülle gemäß Fig. 1 bis 3 und durchgeführtem Kabel.

Die erfindungsgemäße Kabeltülle 1 weist einen Körper 2 aus elastomerem thermoplastischem Kautschuk auf, der in drei Abschnitte geteilt ist. Ein vorderseitiger und ein rückseitiger Ringwulst 3, 4 sind an der Vorder- und Rückseite 6, 7 der Kabeltülle 1 beiderseits eines Mittelstücks 5 angeordnet, dessen Länge der Wanddicke eines die Kabeltülle 1 aufnehmenden Kabeldurchführungsgehäuses 10 entspricht. Auch die Kontur der Außenfläche 8 des Körpers 2 im Abschnitt des Mittelstücks 5 entspricht der Kontur einer Öffnung 12 des Kabeldurchführungsgehäuses 10, in die die Kabeltülle 1 einzusetzen ist, so dass das Mittelstück 5 als Führung zum Einsetzen der Kabeltülle 1 in das Kabeldurchführungsgehäuse 10 dient. Somit wird zwischen dem Kabeldurchführungsgehäuse 10 und der eingesetzten Kabeltülle 1 ein Formschluß erreicht. Der vorderseitige und der rückseitige Ringwulst 3, 4 stehen über die Außenseite bzw. die Innenseite des Kabeldurchführungsgehäuses 10 über.

Durch den Körper 2 verläuft in Längsrichtung ein Kabelkanal 14, der zur Vorder- und Rückseite 6, 7 hin offen ist. Der Kabelkanal 14 weist eine seinen Querschnitt durchspannende elastomere Trennwand 16 auf. Die Trennwand 16 ist aus der Mitte des Körpers zum vorderen Ringwulst 3 versetzt angeordnet, einstückig am Körper 2 angeformt und besteht aus dem gleichen Material wie der Körper 2. Die Kabeltülle 1 ist damit einstückig als Spritzgussteil gefertigt. Die Trennwand 16 weist eine elastisch aufweitbare Kabelöffnung 18 zur Durchführung eines Kabels 20 auf. Im Körper 2 verläuft zwischen seiner Außenfläche 8 und dem Kabelkanal 14 ein aufbiegbarer Längsschlitz 22, der mit der Kabelöffnung 18 verbunden ist und durch den das Kabel 20 in den Kabelkanal 14 einführbar ist, so dass es durch den Körper 2 von seiner Vorderseite 6 zu seiner Rückseite 7 verläuft. Die Aufweitbarkeit der Kabelöffnung 18 bewirkt, dass Kabel unterschiedlicher Querschnitte durch die Kabeltülle 1 durchführbar sind. Die Untergrenze für die Querschnittsfläche der Kabel ist dabei die Querschnittsfläche der Kabelöffnung 18, die Obergrenze ist die Querschnittsfläche des Kabelkanals 14.

Die Kabelöffnung 18 ist außerhalb der Mitte der Trennwand 16 und exzentrisch zu einer durch den Körper 2 verlaufenden Mittelachse M unmittelbar an den Körper 2 angrenzend angeordnet. Sie ist randoffen zum Längsschlitz 22 hin. Am Rand der Kabelöffnung 18 ist die Trennwand 16 verstärkt, so dass sie einen elastisch dehnbaren Dichtring 24 aufweist, der sich um das durchgeführte Kabel 20 legt und sich an dessen Umfang anpasst.

Beidseitig des Längsschlitzes 20 weist der Körper 2 eine erhöhte Wandstärke auf. An das Segment 26 des Körpers 2 mit der erhöhten Wandstärke grenzt die Kabelöffnung 18 an. In Längsrichtung betrachtet steigt entlang des Längsschlitzes 22 die Wandstärke des Segments 26 zum Mittelstück 5 hin an, so dass an den offenen Seiten 6, 7 jeweils eine Fase 28 von etwa 45° gebildet ist.

Beim formschlüssigen Einsetzen der Kabeltülle 1 in das Kabeldurchführungsgehäuse 10 werden die am Längsschlitz 22 einander gegenüberliegenden Flächen 30, 31 zusammengepresst. Der Druck wird auf den sich unmittelbar an den Körper 2 anschließenden Dichtring 24 übertragen, so dass dieser eng am Kabel 20 anliegt. Die beiden einander gegenüberliegenden Flächen 30, 31 weisen jeweils eine Nut 32 und eine Feder 33 auf, so dass beim Zusammenpressen der Flächen 30, 31 zwei Nut-FederVerbindungen geschlossen werden.

### Zusammenfassend ist folgendes festzuhalten:

Die Erfindung betrifft eine Kabeltülle 1 mit einem Körper 2 aus elastomerem Material, durch den in Längsrichtung ein Kabelkanal 14 zur Aufnahme eines Kabels 20 verläuft, und der einen elastisch aufbiegbaren, seine Außenfläche 8 mit dem Kabelkanal 14 verbindenden Längsschlitz 22 aufweist. Erfindungsgemäß ist vorgesehen, dass der Kabelkanal 14 eine seinen Querschnitt durchspannende elastomere Trennwand 16 aufweist mit einer mit dem Längsschlitz 22 verbundenen, elastisch aufweitbaren Kabelöffnung 18 zur Durchführung des aufzunehmenden Kabels 20.

## Patentansprüche

1. Kabeltülle mit einem Körper (2) aus einem elastomeren Material, durch den in Längsrichtung ein Kabelkanal (14) zur Aufnahme eines Kabels (20) verläuft, und der einen elastisch aufbiegbaren, seine Außenfläche (8) mit dem Kabelkanal (14) verbindenden Längsschlitz (22) aufweist, wobei der Kabelkanal (14) eine seinen Querschnitt durchspannende elastomere Trennwand (16) aufweist mit einer mit dem Längsschlitz (22) verbundenen, elastisch aufweitbaren Kabelöffnung (18) zur Durchführung des aufzunehmenden Kabels (20), **dadurch gekennzeichnet, dass** die Trennwand (16) am Rand (24) der Kabelöffnung (18) verstärkt ist.

2. Kabeltülle nach Anspruch 1, **dadurch gekennzeichnet, dass** die Querschnittsfläche der Kabelöffnung (18) kleiner ist als die Querschnittsfläche des aufzunehmenden Kabels (20).

3. Kabeltülle nach einem der vorangehenden Ansprüche, **dadurch gekennzeichnet, dass** die Mitte der Kabelöffnung (18) exzentrisch zu einer längs durch den Körper (2) verlaufenden Mittelachse (M) angeordnet ist.

4. Kabeltülle nach einem der vorangehenden Ansprüche, **dadurch gekennzeichnet, dass** die Kabelöffnung (18) an den Körper (2) angrenzend angeordnet und zum Längsschlitz (22) hin randoffen ist.

5. Kabeltülle nach einem der vorangehenden Ansprüche, **dadurch gekennzeichnet, dass** der Körper (2) beidseitig des Längsschlitzes (22) eine erhöhte Wandstärke aufweist.

6. Kabeltülle nach einem der vorangehenden Ansprüche, **dadurch gekennzeichnet, dass** der Körper (2) an seiner Außenfläche (8) Führungen zum formschlüssigen Einsetzen in ein Kabeldurchführungsgehäuse (10) aufweist.

7. Kabeltülle nach Anspruch 6, **dadurch gekennzeichnet, dass** das Kabeldurchführungsgehäuse (10) auf den eingesetzten Körper (2) einen Druck ausübt, so dass der Längsschlitz (22) beim Einsetzen in das Kabeldurchführungsgehäuse (10) durch Zusammenpressen zweier einander gegenüberliegender Flächen (30, 31) formschlüssig geschlossen wird.

8. Kabeltülle nach Anspruch 7, **dadurch gekennzeichnet, dass** der Körper an den Flächen (30, 31) des Längsschlitzes (22) mindestens eine Nut-Feder-Verbindung (32, 33) aufweist, die beim Schließen des Längsschlitzes (22) geschlossen wird.

9. Kabeltülle nach einem der vorangehenden Ansprüche, **dadurch gekennzeichnet, dass** der Körper (2) und die Trennwand (16) einstückig aus demselben Material gefertigt sind.

10. Kabeltülle nach Anspruch 9, **dadurch gekennzeichnet, dass** der Körper (2) und die Trennwand (16) aus einem thermoplastischen Material, vorzugsweise Kautschuk, gefertigt sind.

11. Kabeltülle nach einem der Ansprüche 9 oder 10, **dadurch gekennzeichnet, dass** sie als Spritzgussteil ausgebildet ist.

## Claims

1. Cable grommet having a body (2) made of elastomeric material, through which a cable duct (14) for receiving a cable (20) extends in the longitudinal direction and which has a longitudinal slit (22) which can be bent open in an elastic manner and connects the outer face (8) of said body to the cable duct (14), wherein the cable duct (14) has a partition (16) which completely spans its cross-section and has an elastically expandable cable aperture (18) for leading through the cable (20) which is to be received, which cable aperture (18) is connected to the longitudinal slit (22),
**characterised in that** the partition (16) is reinforced at the edge (24) of the cable aperture (18).

2. Cable grommet according to Claim 1,
**characterised in that** the cross-sectional area of the cable aperture (18) is smaller than the cross-sectional area of the cable (20) which is to be received.

3. Cable grommet according to one of the preceding claims,
**characterised in that** the centre of the cable aperture (18) is disposed eccentrically in relation to a central axis (M) extending longitudinally through the body (2).

4. Cable grommet according to one of the preceding claims,
**characterised in that** the cable aperture (18) is disposed so as to be adjacent to the body (2) and is open at the edge towards the longitudinal slit (22).

5. Cable grommet according to one of the preceding claims,
**characterised in that** the body (2) has an increased wall thickness on either side of the longitudinal slit (22).

6. Cable grommet according to one of the preceding claims,
**characterised in that** the body (2) has, on its outer face (8), guides for form-locking insertion in a cable lead-through housing (10).

7. Cable grommet according to claim 6,
**characterised in that** the cable lead-through housing (10) exerts a pressure on the inserted body (2), so that the longitudinal slit (22) is closed in a form-locking manner on insertion in the cable lead-through housing (10) as a result of two mutually opposed faces (30, 31) being pressed together.

8. Cable grommet according to Claim 7,
**characterised in that** the body has, on the faces (30, 31) of the longitudinal slit (22), at least one groove-and-tongue connection (32, 33) which is closed when said longitudinal slit (22) is closed.

9. Cable grommet according to one of the preceding claims,
**characterised in that** the body (2) and the partition (16) are manufactured in one piece from the same material.

10. Cable grommet according to Claim 9,
**characterised in that** the body (2) and the partition (16) are manufactured from thermoplastic material, preferably rubber.

11. Cable grommet according to one of Claims 9 or 10,
**characterised in that** it is designed as an injection-moulded part.

## Revendications

1. Passe-câbles muni d'un corps (2) en un matériau élastomère qui est parcouru, dans le sens longitudinal, par un canal de câblage (14) conçu pour recevoir un câble (20), et comporte une fente longitudinale (22) pouvant être ouverte élastiquement par flexion, et reliant la face extérieure (8) dudit corps audit canal de câblage 14, ledit canal de câblage (14) étant muni d'une cloison séparatrice (16) en élastomère qui comble sa section transversale et est percée d'une ouverture (18) pouvant être évasée élastiquement, reliée à la fente longitudinale (22) et destinée au passage du câble (20) devant être reçu, **caractérisé par le fait que** la cloison séparatrice (16) est renforcée sur le bord (24) de l'ouverture (18) de passage du câble.

2. Passe-câbles selon la revendication 1, **caractérisé par le fait que** la superficie de section transversale de l'ouverture (18) de passage du câble est plus petite que la superficie de section transversale du câble (20) devant être reçu.

3. Passe-câbles selon l'une des revendications précédentes, **caractérisé par le fait que** le centre de l'ouverture (18) de passage du câble occupe une position excentrée par rapport à un axe médian (M) passant longitudinalement par le corps (2).

4. Passe-câbles selon l'une des revendications précédentes, **caractérisé par le fait que** l'ouverture (18) de passage du câble occupe une position limitrophe du corps (2) et présente des bords ouverts en direction de la fente longitudinale (22).

5. Passe-câbles selon l'une des revendications précédentes, **caractérisé par le fait que** le corps (2) possède une épaisseur de paroi accrue de part et d'autre de la fente longitudinale (22).

6. Passe-câbles selon l'une des revendications précédentes, **caractérisé par le fait que** le corps (2) comporte, à sa face extérieure (8), des guides en vue de l'insertion, par concordance de formes, dans un boîtier (10) de traversée de câbles.

7. Passe-câbles selon la revendication 6, **caractérisé par le fait que** le boîtier (10) de traversée de câbles exerce une pression sur le corps (2) inséré, de telle sorte que la fente longitudinale (22) soit fermée par concordance de formes, lors de l'insertion dans ledit boîtier (10) de traversée de câbles, par compression de deux surfaces (30, 31) situées mutuellement en vis-à-vis.

8. Passe-câbles selon la revendication 7, **caractérisé par le fait que** le corps présente, sur les surfaces (30, 31) de la fente longitudinale (22), au moins une solidarisation par rainure(s) et languette(s) qui est fermée lors de l'obturation de ladite fente longitudinale (22).

9. Passe-câbles selon l'une des revendications précédentes, **caractérisé par le fait que** le corps (2) et la cloison séparatrice (16) sont fabriqués d'un seul tenant à partir du même matériau.

10. Passe-câbles selon la revendication 9, **caractérisé par le fait que** le corps (2) et la cloison séparatrice (16) sont fabriqués en un matériau thermoplastique, de préférence du caoutchouc.

11. Passe-câbles selon l'une des revendications 9 ou 10, **caractérisé par le fait qu'**il est réalisé sous la forme d'une pièce venue de coulée par injection.
